# EUROPÄISCHE PATENTSCHRIFT

(11) **EP 1 789 698 B1**
(45) Veröffentlichungstag und Bekanntmachung des Hinweises auf die Patenterteilung: **18.06.2008**
(21) Anmeldenummer: 05782728.9
(22) Anmeldetag: 31.08.2005
(51) Int. Cl.: F16F 15/173

(54) **VISKOSE-DÄMPFER MIT EINEM AUS BLECH GEFERTIGTEM GEHÄUSE**
VISCOSE DAMPER COMPRISING A SHEET METAL HOUSING
AMORTISSEUR EN VISCOSE COMPRENANT UN BOITIER EN TOLE

(30) Priorität: 02.09.2004 DE 102004042942; 13.07.2005 DE 102005032639
(43) Veröffentlichungstag der Anmeldung: 30.05.2007
(73) Patentinhaber: Hasse & Wrede GmbH, 12681 Berlin (DE)
(72) Erfinder: KIENER, Wolfgang, 10247 Berlin (DE)
(74) Vertreter: Mattusch, Gundula
(86) Internationale Anmeldenummer: PCT/EP2005/009374
(87) Internationale Veröffentlichungsnummer: WO 2006/024515

(56) Entgegenhaltungen:
- AT-B- 384 088
- US-A- 5 931 051
- US-A- 5 979 390
- DATABASE WPI Week 200429 Derwent Publications Ltd., London, GB; AN 2004-313046 XP002351815 & RU 2 225 955 C (MAKAREVICH ET AL) 20. März 2004 (2004-03-20)

## Beschreibung

Die vorliegende Erfindung betrifft einen Viskose-Dämpfer mit einem Gehäuse und einem Deckel, wobei das Gehäuse und/oder der Deckel aus Blech gefertigt sind und innerhalb des Gehäuses ein beweglicher, vorzugsweise in einem Fluid schwimmend gelagerter Schwungring angeordnet ist und der Viskose-Dämpfer eine Lagerbohrung aufweist.

Viskose-Dämpfer der vorerwähnten Art sind an sich bekannt und werden eingesetzt zur Bedämpfung insbesondere von Kurbelwellen von Motoren.

Dabei werden die Viskose-Dämpfer auf eine entsprechende Welle über ihre Lagebohrung zentriert.

Der vorliegenden Erfindung liegt die Aufgabe zugrunde, einen Viskose-Dämpfer der gattungsgemäßen Art zu schaffen, der mit zusätzlichen Zentriermöglichkeiten ausgestattet ist. Dokument RU-C2-222 5955 offenbart so einen Viskose-Dämpfer, mit einer Zentrierungsplatte.

Diese Aufgabe wird erfindungsgemäß dadurch gelöst, dass am Gehäuse und/oder - wenn vorhanden - gegebenenfalls am Deckel mindestens zwei auf einem gemeinsamen Kreisumfang liegende Zentriervorsprünge vorgesehen sind, die durch Aussparungen, Ausstanzungen, Ausprägungen oder dergleichen gebildet sind.

Über diese Zentriervorsprünge kann ein Viskose-Dämpfer auf einfache Art und Weise auch auf einem größeren Durchmesser zentriert werden als auf dem der Lagerbohrung es besteht die Möglichkeit einer zusätzlichen Zentrierung über die Zentriervorsprünge.

Bevorzugt wird eine Ausführungsform, bei der jeweils drei Zentriervorsprünge auf einem gemeinsamen Kreisumfang liegen.

Grundsätzlich ist schon mit zwei Zentriervorsprüngen eine Zentrierung möglich, diese wird aber deutlich verbessert durch die Anordnung von drei Zentriervorsprüngen, wobei diese sinnvoller Weise gleichmäßig winkelversetzt zueinander angeordnet sein sollten.

Die Verwendung mehrerer als dreier Zentriervorsprünge kann im Einzelfall sinnvoll sein, ist aber nicht unbedingt zwingend notwendig.

Die Aussparungen, Ausstanzungen, Ausprägungen oder dergleichen können sowohl radial wie auch tangential verlaufend angeordnet sein.

Weitere Merkmale der Erfindung sind Gegenstand weiterer Unteransprüche.

Ein Ausführungsbeispiel der Erfindung ist in den beigefügten Zeichnungen dargestellt und wird im folgenden näher beschrieben.

Es zeigen:
- Figur 1: eine im Teilschnitt gezeigte Perspektivdarstellung eines erfindungsgemäßen Viskose-Dämpfers

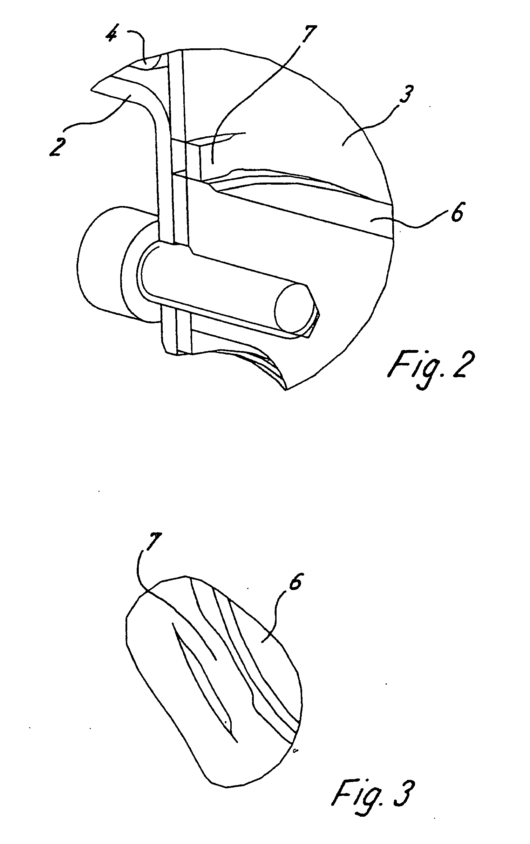

- Figur 2: die in Figur 1 mit II bezeichnete Einzelheit in vergrößerter Darstellung
- Figur 3: die in Figur 1 mit III bezeichnete Einzelheit in vergrößerter Darstellung

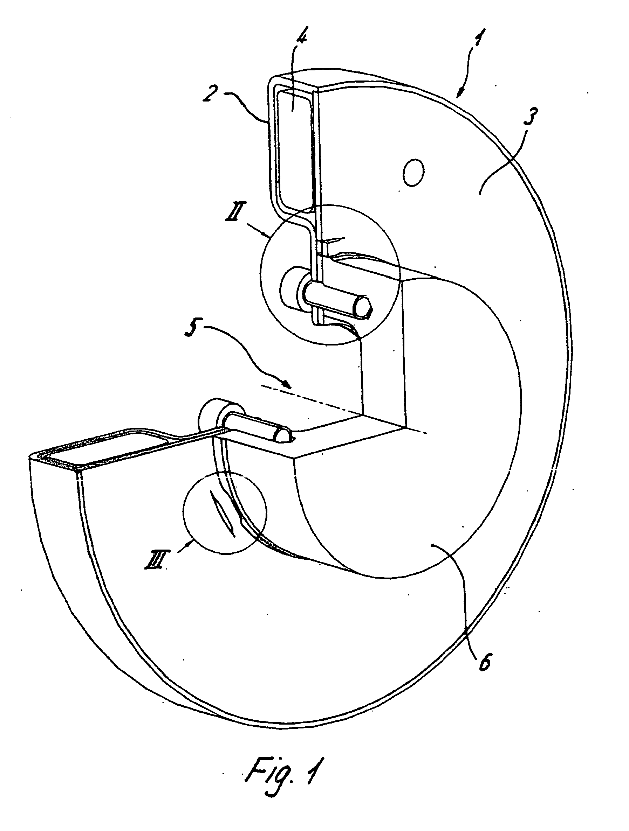

In Figur 1 ist mit dem Bezugszeichen 1 insgesamt ein Viskose-Dämpfer bezeichnet, der in an sich bekannter Weise aus einem Gehäuse 2, einem dieses Gehäuse 2 verschließenden Deckel 3 und einem Schwungring 4 besteht, der innerhalb des Gehäuses 2 hier in einem Fluid schwimmend gelagert ist.

Der Viskose-Dämpfer 1 ist insgesamt mit einer Lagerbohrung 5 ausgestattet und wird über diese Mittenbohrung 5 üblicherweise auf einer nur andeutungsweise gezeigten Welle 6 zentriert.

Gemäß vorliegender Erfindung sind im dargestellten Ausführungsbeispiel am Deckel 3 Zentriervorsprünge 7 vorgesehen, die eine Zentrierung des Viskose-Dämpfers 1 auf einem größeren als dem Wellendurchmesser ermöglichen oder eine Zentrierung des Viskose-Dämpfers 1 zusätzlich zu der Zentrierung auf der Welle 6 erlauben.

Dabei sind zumindest zwei Zentriervorsprünge 7 auf einem gemeinsamen Kreisumfang liegend am Deckel vorgesehen. Selbstverständlich können zusätzliche Zentriervorsprünge 7 auch am Gehäuse 2 vorgesehen sein.

Es ist auch möglich, am Deckel 3 oder am Gehäuse 2 auf verschiedenen Kreisumfängen liegende Zentriervorsprünge 7 anzuordnen.

Bevorzugt sind jeweils drei Vorsprünge 7 auf einem gemeinsamen Kreisumfang, da sich hierdurch ein äußerst gutes Verhältnis zwischen dem Aufwand zur Herstellung der Zentriervorsprünge 7 und der Zuverlässigkeit und Präzision der Zentrierung ergibt.

Die Zentriervorsprünge 7 sind durch Ausprägungen, Ausstanzungen oder dergleichen im Bereich des Deckels 3 oder des Gehäuses 2 gebildet. Dabei können die Zentriervorsprünge sowohl radial wie auch tangential verlaufend am Deckel 3 und/oder am Gehäuse 2 vorgesehen sein.

Über die dargestellten Ausführungsbeispiele hinausgehend ist es natürlich auch denkbar, am Gehäuse 2 des Viskose-Dämpfers 1 mehrere Zentriervorsprünge 7 anzubringen, die auf Kreisen mit unterschiedlich großen Durchmessern liegen.

Hierdurch wird die Einsatzmöglichkeit eines erfindungsgemäßen Viskose-Dämpfers 1 erhöht.

## Patentansprüche

1. Viskose-Dämpfer (1) mit einem Gehäuse (2) und einem Deckel (3), wobei das Gehäuse (2) und/oder gegebenenfalls der Deckel (3) aus Blech gefertigt sind und innerhalb des Gehäuses (2) ein beweglicher, in einem Fluid schwimmend gelagerter Schwungring (4) angeordnet ist und der Viskose-Dämpfer (1) eine Lagerbohrung (5) sowie eine Zentriereinrichtung aufweist, **dadurch gekennzeichnet, dass** die Zentriereinrichtung aus mindestens zwei am Gehäuse (2) und/oder gegebenenfalls am Deckel (3) vorgesehenen und auf einem gemeinsamen Kreisumfang liegenden Zentriervorsprüngen (7) besteht, wobei die Zentriervorsprünge (7) durch Aussparungen, Ausstanzungen, Ausprägungen oder dergleichen gebildet sind.

2. Viskose-Dämpfer nach Anspruch 1, **dadurch gekennzeichnet, dass** vorzugsweise jeweils drei Zentriervorsprünge (7) auf einem gemeinsamen Kreisumfang liegen.

3. Viskose-Dämpfer nach Anspruch 1 oder 2, **dadurch gekennzeichnet, dass** die Zentriervorsprünge (7) jeweils auf einem konzentrisch zur Lagerbohrung (5) liegenden Kreisumfang angeordnet sind.

4. Viskose-Dämpfer nach einem der vorhergehenden Ansprüche, **dadurch gekennzeichnet, dass** die Zentriervorsprünge (7) radial oder tangential verlaufend am Deckel (3) und/oder am Gehäuse (2) angeordnet sind.

5. Viskose-Dämpfer nach einem der vorhergehenden Ansprüche, **dadurch gekennzeichnet, dass** am Gehäuse (2) mehrere Zentriervorsprünge (7) vorgesehen sind, die auf Kreisen mit unterschiedlich großen Durchmessern liegen.

## Claims

1. Viscous damper (1) comprising a housing (2) and a lid (3), wherein said housing (2) and or said lid (3), if applicable, are made of a metal sheet, wherein a mobile fly ring (4) is disposed so as to float in a fluid, with said viscous damper (1) presenting a bearing bore (5) as well as a centring means, **characterised in that** said centring means consists of at least two centring projections (7) formed on said housing (2) and/or said lid (3), if applicable, and are located on a common circular circumference, with said projections (7) being formed by recesses, punched parts, embossed parts or similar formations.

2. Viscous damper according to Claim 1, **characterised in that** three respective centring projections (7) are preferably located on a common circular circumference.

3. Viscous damper according to Claim 1 or 2, **characterised in that** said centring projections (7) are respectively located on a circular circumference disposed in concentric relationship to said bearing bore (5).

4. Viscous damper according to any of the preceding Claims, **characterised in that** said centring projections (7) are disposed on said lid (3) and/or on said housing (2) so as to extend radially or tangentially.

5. Viscous damper according to any of the preceding Claims, **characterised in that** several centring projections (7) are formed on said housing, which are located on circles having diameters of different sizes.

## Revendications

1. Amortisseur visqueux (1) comprenant un boîtier (2) et un couvercle (3), dans lequel ledit boîtier (2) et/ou éventuellement ledit couvercle (3) sont fait en tôle, dans lequel un anneau roulant mobile (4) est disposé et logé de façon flottant dans un fluide, l'amortisseur visqueux (1) présentant un alésage de logement (5) ainsi qu'un moyen de centrage, **caractérisé en ce que** ledit moyen de centrage est composé d'au moins deux saillies de centrage (7) formé audit boîtier (2) et/ou éventuellement audit couvercle (3) et se trouvant sur une périphérie d'un cercle commune, lesdites saillies de centrage (7) étant formées par des évidements, des creux poinçonnés, des parties frappées ou des formations similaires.

2. Amortisseur visqueux selon la revendication 1, **caractérisé en ce que** trois saillies de centrage (7) respectives se trouvent sur une périphérie d'un cercle commune, de préférence.

3. Amortisseur visqueux selon la revendication 1 ou 2, **caractérisé en ce que** lesdites saillies de centrage (7) sont disposées, respectivement, sur une périphérie d'un cercle disposée en position concentrique relativement audit alésage de logement (5).

4. Amortisseur visqueux selon une quelconque des revendications précédentes, **caractérisé en ce que** lesdites saillies de centrage (7) sont disposées audit couvercle (3) et/ou audit boîtier (2), en s'étendant radialement ou tangentiellement.

5. Amortisseur visqueux selon une quelconque des revendications précédentes, **caractérisé en ce que** plusieurs saillies de centrage (7) sont formées audit boîtier, qui se trouvent sur des cercles ayant des diamètres de grandeurs différentes.
